# EUROPEAN PATENT APPLICATION

(11) **EP 3 916 682 A1**
(43) Date of publication of application: **01.12.2021**
(21) Application number: 21172495.0
(22) Date of filing: 06.05.2021
(51) Int. Cl.: G06T 17/00, G06F 3/12, B29C 67/00, G06F 30/00

(54) **SYSTEMS, DEVICES, AND METHODS FOR PRINTING SLICES OF A THREE-DIMENSIONAL COMPONENT MODEL**

(30) Priority: 27.05.2020 US 202016884849
(71) Applicant: General Electric Company, Schenectady, NY 12345 (US)
(72) Inventor: ZHANG, Xuefeng, Cincinnati, 45215 (US); HALL, Christopher, Cincinnati, 45215 (US); SCHNEIDER, William, Cincinnati, 45215 (US)
(74) Representative: Openshaw & Co.

(57) **Abstract**

A method carried out by a printing device includes receiving a model of a three-dimensional component, receiving an output structure definition for the component, and segmenting the model of the component into a stack of slices. The method further includes, for each of the slices in the stack, outputting a respective printing layer comprising an arrangement of one or more slice instances of the slice according to the output structure definition.

## Description

### FIELD

The present disclosure generally relates to printing systems, printing devices, and methods carried out by printing systems and printing devices, and more specifically, to systems, devices, and methods for printing slices of a three-dimensional component model.

### BACKGROUND

Recent advances in three-dimensional printing (3D printing) have led to widespread use of 3D printing in the production and manufacture of goods. Though multiple techniques exist for 3D printing, most involve adding successive layers of material to reproduce a component that was originally modeled using a computer-aided design (CAD) program.

A printing device may fabricate an output via a 3D printer based on a model of a desired printer output, and in some instances, the printer output could include multiple copies of a given component. According to existing approaches, the printing device fabricates the printer output via the 3D printer based on a single model of the entire printer output. However, generating such a model can take considerable time and require significant resources, both of which may increase as the number of copies of the component to be fabricated increases.

### SUMMARY

In an embodiment, a method for outputting respective printing layers for slices of a three-dimensional component model is carried out by a printing device. The method includes receiving a model of a three-dimensional component, receiving an output structure definition for the component, and segmenting the model of the component into a stack of slices. The method further includes, for each of the slices in the stack, outputting a respective printing layer comprising an arrangement of one or more slice instances of the slice according to the output structure definition.

In an embodiment, a printing device includes a processor and a non-transitory computer-readable storage medium that includes instructions. When executed by the processor, the instructions cause the printing device to receive a model of a three-dimensional component, receive an output structure definition for the component, and segment the model of the component into a stack of slices. The instructions further cause the printing device to, for each of the slices in the stack, output a respective printing layer comprising an arrangement of one or more slice instances of the slice according to the output structure definition.

In an embodiment, a method for outputting respective printing layers for slices of a three-dimensional component model is carried out by a printing device. The method includes receiving a model of a three-dimensional component, receiving an output structure definition for the component, and segmenting the model of the component into a stack of slices. The method further includes, for each of the slices in the stack, generating a respective printing-layer model that includes an arrangement of one or more slices instances of the slice, and generating a respective printing-layer model that includes an arrangement of one or more slices instances of the slice. For at least one of the slices in the stack, the respective printing layer comprising the representation of the respective generated printing-layer model is output prior to generating the respective printing-layer model for one or more other slices in the stack.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

Fig. 1 depicts a printing system, according to one or more embodiments illustrated and described herein;
Fig. 2 depicts a block diagram of a printing device, according to one or more embodiments illustrated and described herein;
Fig. 3 depicts a flowchart of a method carried out by a printing device, according to one or more embodiments illustrated and described herein;
Fig. 4 depicts a model of a three-dimensional component, according to one or more embodiments illustrated and described herein;
Fig. 5a depicts a printer output in the form of a tiling of a component, according to one or more embodiments illustrated and described herein;
Fig. 5b depicts a lattice unit cell that includes a model of a component, according to one or more embodiments illustrated and described herein;
Fig. 5c depicts a tiling of a lattice unit cell, according to one or more embodiments illustrated and described herein;
Fig. 6 depicts a printer output that includes a representation of a model of a component base and includes representations of component instances, according to one or more embodiments illustrated and described herein;
Fig. 7 depicts a stack of slices of a model of a component, according to one or more embodiments illustrated and described herein;
Fig. 8a depicts a tiling of a slice, according to one or more embodiments illustrated and described herein;
Fig. 8b depicts a tiling of a slice within a printing-layer boundary, according to one or more embodiments illustrated and described herein; and
Fig. 9 depicts a printing layer that includes slice instances of a slice, according to one or more embodiments illustrated and described herein.

### DETAILED DESCRIPTION

Printing systems, printing devices, and methods for printing slices of a three-dimensional component model are disclosed herein. In some embodiments, a printing device receives a model of a three-dimensional component, receives an output structure definition for the component, and segments the model of the component into a stack of slices. For each of the slices in the stack, the printing device outputs a respective printing layer that includes an arrangement of one or more slice instances of the slice according to the output structure definition.

By outputting a respective printing layer for each slice of a segmented component model, the printing device need not generate a single model of the entire printer output. Additionally, since the respective printing layer for each slice of the component model may include an arrangement of multiple component model slice instances (e.g., copies of the component model slice) of the component, the printer output-comprised of all the printing layers-may include multiple copies of the component. In some embodiments, the printing device generates a respective model for each slice and outputs a respective representation of each generated model. In such instances, the printing device may output the representation of a model for a given slice prior to generating the model for a different slice. Accordingly, the printing device may release resources required for outputting a given printing layer prior to outputting another printing layer.

Various embodiments of printing systems, printing devices, and methods for printing slices of a three-dimensional component model will now be described in detail with reference to the drawings.

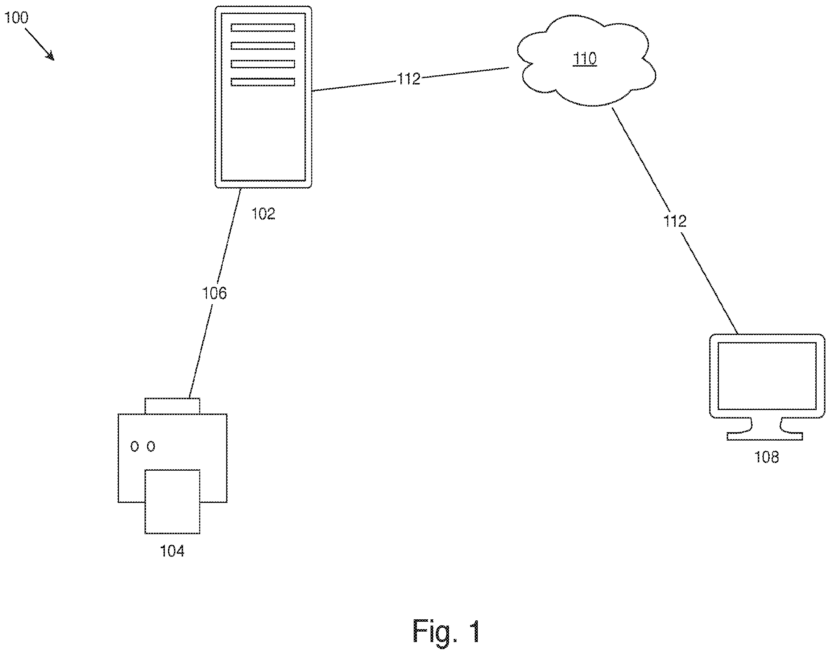

Fig. 1 depicts a printing system, according to one or more embodiments illustrated and described herein. As shown, a printing system 100 includes a printing device 102, a three-dimensional (3D) printer 104 communicatively connected to the printing device 102 via a communication link 106, and a computing terminal 108 communicatively connected to the printing device 102 via a network 110 and respective communication links 112.

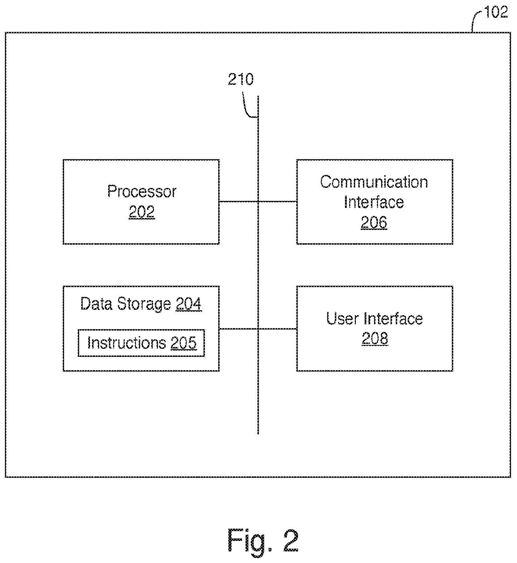

Printing device 102 may take the form of any device capable of carrying out the printing-device functions described herein. As such, the printing device 102 could take the form of a server computer, a mainframe, a virtual machine, a workstation, a terminal, a personal computer, or any combination of these or other printing devices. An example of a printing device 102 is described below with reference to Fig. 2.

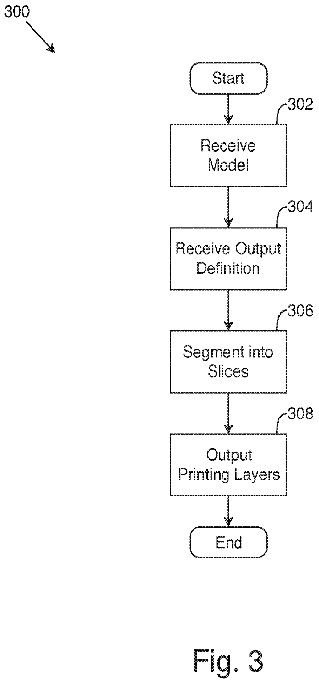

Still referring to Fig. 1, 3D printer 104 may fabricate an output by, for example, outputting successive layers that collectively form the output. The thickness of a given layer could range, for instance, in the tens of micrometers up to hundreds of micrometers, among other possibilities. Various processes for depositing layers are possible, as will be understood by one of skill in the art. Additional aspects of printer output by a 3D printer are discussed below.

Communication link 106 could take the form of a link capable of transferring data between printing device 102 and 3D printer 104. For example, the communication link could take the form of (or include) a serial RS-232 communication link, a USB communication link, a Wi-Fi communication link, and/or an Ethernet communication link, among numerous other possibilities.

Computing terminal 108 could be a workstation, a terminal, a personal computer, a tablet device, or any combination of these, as just a few examples. The computing terminal 108 may include a keyboard and mouse for receiving input (e.g., from a user) and a display for presenting images or other output to the user. As another possibility, the computing terminal 108 may include a touch display for receiving input from a user and for presenting output to the user. Printing device 102 may receive input and/or provide output via a user interface of computing terminal 108-for instance, by sending instructions to computing terminal 108 to output information sent to the computing terminal 108 from printing device 102 or sending instructions to the computing terminal 108 to provide received information to the printing device 102. Those of skill in the art will appreciate that computing terminal 108 may take other forms as well without departing from the scope of the disclosure.

Network 110 may include one or more computing systems and at least one network infrastructure configured to facilitate transferring data between one or more entities communicatively connected to network 110. The network 110 may include one or more wide-area networks (WANs) and/or local-area networks (LANs), which may be wired and/or wireless networks. In some examples, the network 110 may include the Internet and/or one or more wireless cellular networks, among other possibilities. The network 110 may operate according to one or more communication protocols such as Ethernet, Wi-Fi, internet protocol (IP), transmission control protocol (TCP), long-term evolution (LTE), and the like. Although the network 110 is shown as a single network, it should be understood that the network 110 may include multiple, distinct networks that are themselves communicatively linked. The network 110 could take other forms as well.

Communication links 112 may communicatively link respective entities with network 110 to facilitate communication between entities communicatively connected to the network 110. Any of the communication links 112 may be a combination of hardware and/or software, perhaps operating on one or more communication-link layers such as one or more physical, network, transport, and/or application layers.

Those of skill in the art will appreciate that printing system 100 may include different and/or additional entities. For example, the printing system 100 may include additional printing devices communicatively connected to 3D printer 104, additional 3D printers communicatively connected to printing device 102 and/or other printing devices, or a combination of these. Different and/or additional communication links may be present, such as one or more communication links connecting 3D printer 104 to network 110. Other examples are possible as well, as will be understood by those of skill in the art.

Fig. 2 depicts a block diagram of the printing device 102, according to one or more embodiments illustrated and described herein. As shown, printing device 102 includes a processor 202, a data storage 204 storing instructions 205, a communication interface 206, and a user interface 208, each of which are communicatively connected via a system bus 210. It should be understood, however, that printing device 102 may include different and/or additional components. For example, in an embodiment, printing device 102 does not include user interface 208.

Processor 202 may take the form of one or more general-purpose processors and/or one or more special-purpose processors, and may be integrated in whole or in part with data storage 204, communication interface 206, user interface 208, and/or any other component of printing device 102, as examples. Accordingly, processor 202 may take the form of or include a controller, an integrated circuit, a microchip, a central processing unit (CPU), a microprocessor, a system on a chip (SoC), a field-programmable gate array (FPGA), and/or an application-specific integrated circuit (ASIC), among other possibilities.

Data storage 204 may take the form of a non-transitory computer-readable storage medium such as a hard drive, a solid-state drive, an erasable programmable read-only memory (EPROM), a universal serial bus (USB) storage device, a compact disc read-only memory (CD-ROM) disk, a digital versatile disc (DVD), a relational database managements system (RDBMS), any other non-volatile storage, or any combination of these, to name just a few examples.

Instructions 205 may be stored in data storage 204, and may include machine-language instructions executable by processor 202 to cause printing device 102 to perform the printing-device functions described herein. Additionally or alternatively, instructions 205 may include script instructions executable by a script interpreter configured to cause processor 202 and printing device 102 to execute the instructions specified in the script instructions. Those having skill in the art will recognize that instructions 205 may take other forms as well, and that other data may be stored in data storage 204.

Communication interface 206 may be any component capable of performing the communication-interface functions described herein. As such, communication interface 206 could take the form of an Ethernet, Wi-Fi, Bluetooth, and/or USB interface, among many other examples. Communication interface 206 may receive data via communication link 106 and/or via communication links 112 over network 110 (See Fig. 1), for instance. As examples, communication interface 206 may facilitate communication between printing device 102 and 3D printer 104 over communication link 106, or may facilitate communication with computing terminal 108 via network 110 over communication links 112.

Still referring to Fig. 2, user interface 208 may be any component capable of carrying out the user-interface functions described herein. For example, the user interface 208 may be configured to receive input from a user and/or output information to the user. User input might be achieve via a keyboard, a mouse, or another component communicatively linked to printing device 102. As another possibility, input may be realized via a touchscreen display of printing device 102. Output to a user may be provided via a computer monitor or a loudspeaker (such as a computer speaker) communicatively linked to printing device 102, as an example. Some components may provide for both input and output, such as the above-mentioned touchscreen display. Those having skill in the art will understand that user interface 208 may take numerous other forms as well.

System bus 210 may be any component capable of performing the system-bus functions described herein. In an embodiment, system bus 210 is any component configured to transfer data between processor 202, data storage 204, communication interface 206, user interface 208, and/or any other component of printing device 102. In an embodiment, system bus 210 includes a traditional bus as is known in the art. In other embodiments, system bus 210 includes a serial RS-232 communication link, a USB communication link, and/or an Ethernet communication link, alone or in combination with a traditional computer bus, among numerous other possibilities. In some examples, system bus 210 may be formed from any medium that is capable of transmitting a signal, such as conductive wires, conductive traces, or optical waveguides, among other possibilities. Those of skill in the art will recognize that system bus 210 may take various other forms as well.

Fig. 3 depicts a flowchart of a method carried out by a printing device, according to one or more embodiments illustrated and described herein. Though the method is described below as being carried out by printing device 102, it should be understood that the method may be carried out by any entity or combination of entities of printing system 100.

As shown in Fig. 3, a method 300 begins at step 302 with printing device 102 receiving a model of a three-dimensional component. The model of the three-dimensional component may likewise take the form of a three-dimensional model. The component could be any component that can be printed via 3D printer 104, such as a component of an air-oil separator or a heat exchanger, among other possibilities.

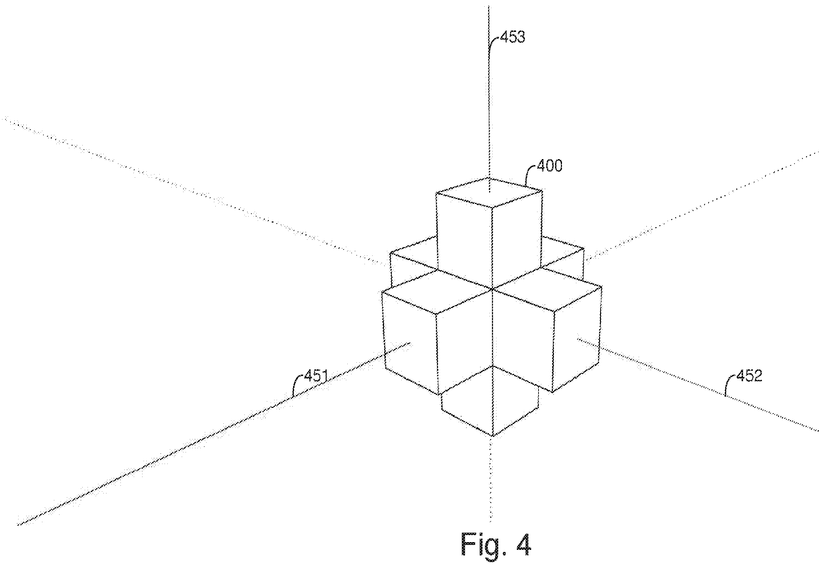

Fig. 4 depicts a model of a three-dimensional component, according to one or more embodiments illustrated and described herein. As shown, a component model 400 of a component takes the form of a model that represents a component generally in the form of a three-dimensional plus sign. Component model 400 may include data (e.g., a file) that, for example, specifies a surface geometry of the component within a Cartesian coordinate system. For instance, component model 400 is illustrated in Fig. 4 with respect to mutually perpendicular axes 451, 452, and 453. The model of the component may have been created using a computer-aided design (CAD) program, or may have been generated based on a 3D scan of the component that was then saved as a file, among other possibilities. In an embodiment, component model 400 takes the form of (or includes) a stereolithography (STL) file that represents the component. The model of the component may be formed such that the component has a closed surface, among other possibilities. Those of skill in the art will appreciate that component model 400 may take other forms as well.

Referring to Fig. 3 in conjunction with Figs. 1 and 2, component model 400 may be received from a data storage, such as data storage 204 of printing device 102 or a USB drive connected to the printing device. 102 As another possibility, component model 400 may be received from computing terminal 108 via communication interface 206 of the printing device-for example, over network 110 via communication links 112. As a further possibility, component model 400 may be received via user interface 208 of printing device 102, perhaps in combination with data storage 204 and/or communication interface 206. For example, the user interface may cause the printing device 102 to obtain component model 400 from a data storage or another computing terminal. Those of skill in the art will appreciate that other examples of receiving component model 400 are possible as well without departing from the scope of the disclosure.

Referring to Fig. 3, at step 304, printing device 102 receives an output structure definition for the component of component model 400 received at step 302. In an embodiment, the output structure definition takes the form of a lattice structure definition, and in another embodiment, the output structure definition takes the form of a pattern structure definition. These are discussed in more detail below, though it should be understood that the output structure definition could take other forms as well.

As will be described, an embodiment of the present disclosure includes printing device 102 outputting printing layers, each having a respective printing-layer boundary and including a respective tiling of a given slice within the printing-layer boundaries. The printing-layer boundaries may take the form of two-dimensional boundaries, and may be based on a three-dimensional lattice filling boundary of an output structure definition (and specifically a lattice structure definition) received by printing device 102 at step 304. The respective tiling of each of the slices may also be based on the lattice structure definition. For instance, the lattice structure definition may include an indication of a given type of tiling, and the tiling of each of the slices may be a respective tiling of the indicated type. When the printing layers output by printing device 102 are based on a lattice structure definition, the printer output may generally represent a lattice that includes multiple copies of the component modeled by component model 400.

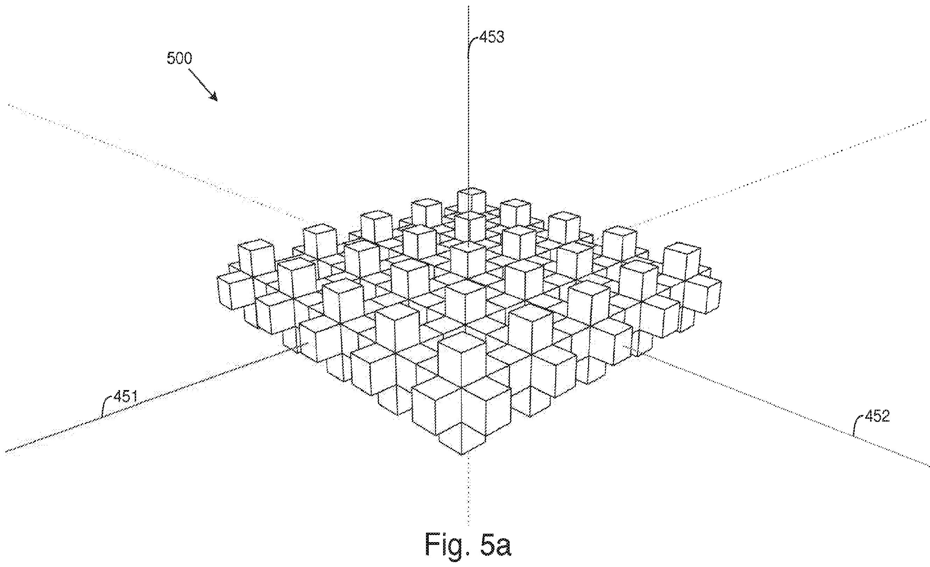

Fig. 5a depicts a printer output in the form of a tiling of a component modeled by a component model, according to one or more embodiments illustrated and described herein. As shown, a printer output 500 includes a tiling of the component modeled by component model 400 depicted in Fig. 4. The tiling includes multiple copies of the component, and each copy represents a translation of another copy along either axis 451 or axis 452, or a translation along a combination of these axes. Though the illustrated translations are along mutually perpendicular axes, it should be understood that the translations need not be in mutually perpendicular directions.

The tiling of a component may represent a lattice, such as the filing shown in Fig. 5a. In an embodiment, the tiling of the component modeled by component model 400 represents a tiling of a lattice unit cell that includes component model 400. A model of the lattice unit cell may be included in the lattice structure definition, or the lattice unit cell may be determined by printing device 102 based on component model 400 (e.g., based on the surfaces of the model of the component), among other possibilities.

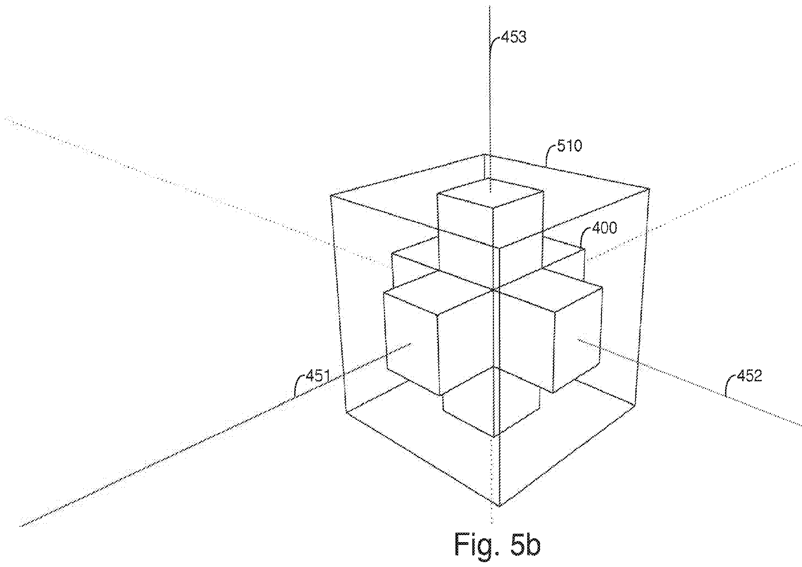

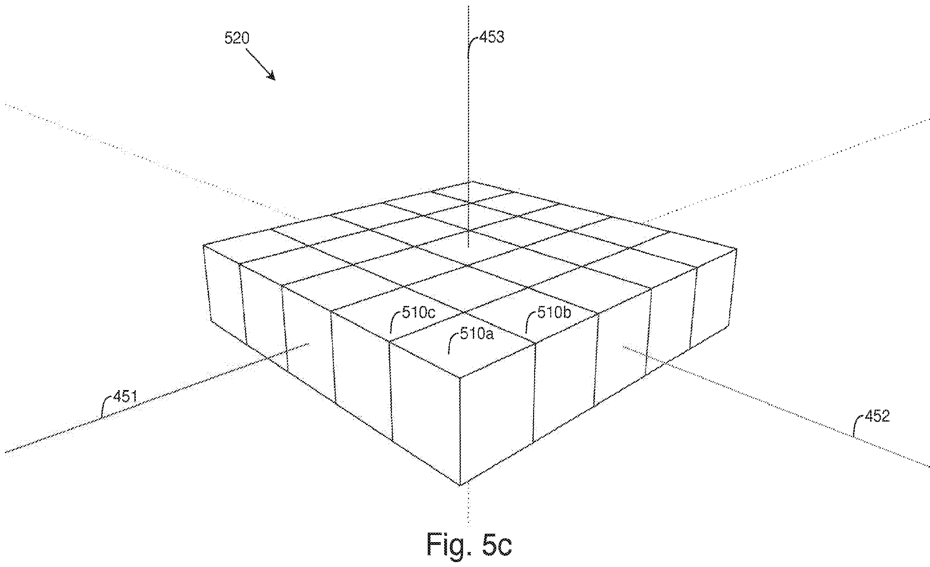

Fig. 5b depicts a lattice unit cell that includes component model 400, and Fig. 5c depicts a tiling of the lattice unit cell depicted in Fig. 5b, according to one or more embodiments illustrated and described herein. As shown in Fig. 5b, a lattice unit cell 510 takes the form of a cube (a three-dimensional square), and as shown in Fig. 5c, a tiling 520 of lattice unit cell 510 includes a plurality of tiles of the lattice unit cell (including tiles 510a, 510b, and 510c) that collectively form a cubic honeycomb. In some embodiments, the lattice unit cell could take the form of any parallelepiped (e.g., a three-dimensional polygon such as a cuboid) and the tiling could take the form of any honeycomb (e.g., a cubic honeycomb). Other examples are possible as well without departing from the scope of the disclosure. In the embodiment illustrated in Fig. 5c, tiling 520 of lattice unit cell 510 takes the form of a space-filling tiling such that there are no gaps between adjacent tiles.

In an embodiment, one or more sides of the lattice unit cell are adjacent to (but do not intersect) the component model (e.g., a surface of the component model) within the lattice unit cell. For instance, all sides of lattice unit cell 510 shown in Fig. 5b are adjacent to component model 400. Additionally, in some embodiments, the component copies of a printer output are adjacent to one or more other component copies of the printer output. For instance, in the embodiment shown in Fig. 5a, each component copy is adjacent to at least one other component copy in the tiling of printer output 500.

In addition to (or instead of) the model of the lattice unit cell described above, the lattice structure definition may include a model of a three-dimensional lattice filling boundary, within which the printer output will represent a tiling of the component. Additional aspects of the lattice filling area are provided below.

As mentioned above, another type of output structure definition that may be received at step 304 is a pattern structure definition, which includes a model of a three-dimensional output base and an identification of a respective pose for each of a plurality of component instances of the component model. Each of the component instances intersects (or is adjacent to) the model of the output base. As will be described, an embodiment of the present disclosure includes printing device 102 outputting printing layers having slice instances of a slice. Each slice instance corresponds to a respective component instance and is arranged in the printing layer according to the respective pose for the component instance indicated by the pattern structure definition. The printer output may include respective representations of each of the component instances, such that the printer output includes multiple copies of the component. Additionally, because each component instance intersects (or is adjacent to) the model of the output base, the representations of each of the component instances are attached to the output base included in the printer output. In an example, a representation of a component instance in the printer output is analogous to a respective copy of the component.

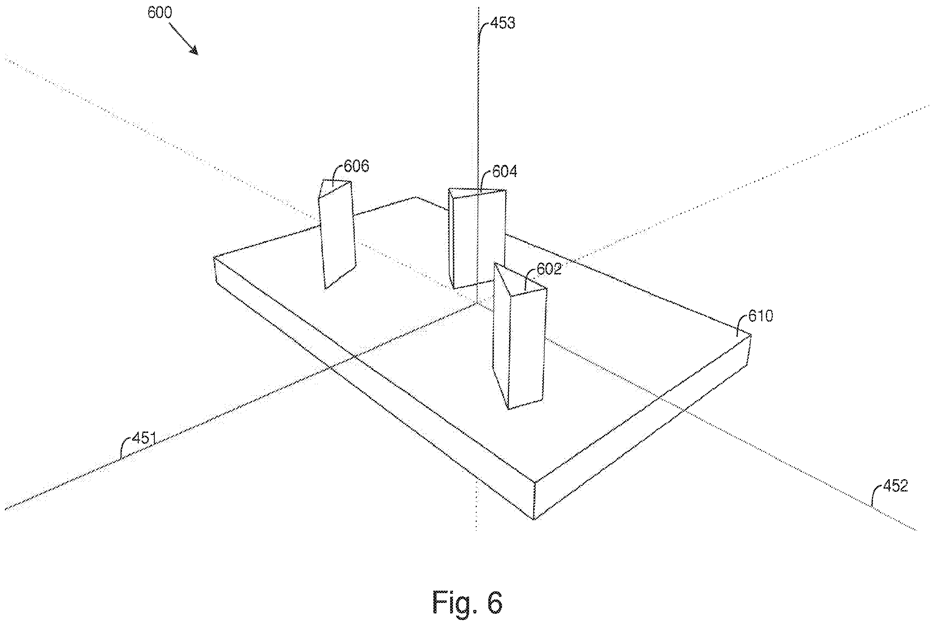

Fig. 6 depicts a printer output that includes a representation of a model of a component base and includes representations of component instances, according to one or more embodiments illustrated and described herein. As shown, printer output 600 includes a representation 610 of a model of an output base included in a given pattern structure definition, which is to say that the printer output includes the modeled output base. The printer output further includes representations 602, 604, and 606 of component instances of a component model that, in this example, represents a component in the form of a triangular prism.

Printer output 600 depicts the component instances as having respectively different poses (as specified by given pattern structure definition). A pose for a given component instance may include a respective location of the component instance, such as a location with respect to the printer output or the model of the output base. Additionally or alternatively, a pose for a given component instance could include a respective orientation of the component instance, such as a rotation of the component instance around an axis perpendicular to a given surface of the model of the output base. The given surface could be a surface that is intersected by (or adjacent to) the given component instance. As shown in Fig. 6, representation 602, 604, and 606 each have respectively different locations and orientations with respect to representation 610 of the model of the output base, reflecting that the represented component instances each have respectively different locations with respect to the represented model of the output base. In an embodiment, a given axis of the component instances are each parallel to the other component instances, and the axis of the component instances could take the form of (or include) a given axis of the model for the component instances.

Referring back to Fig. 3, at step 306, printing device 102 segments the model of the component into a stack of slices. Each of the slices may take the form of a respective planar slice, and each of the slices in the stack may be parallel to a cutting plane. The stack of slices may be ordered along a cutting axis perpendicular to the slices of the stack.

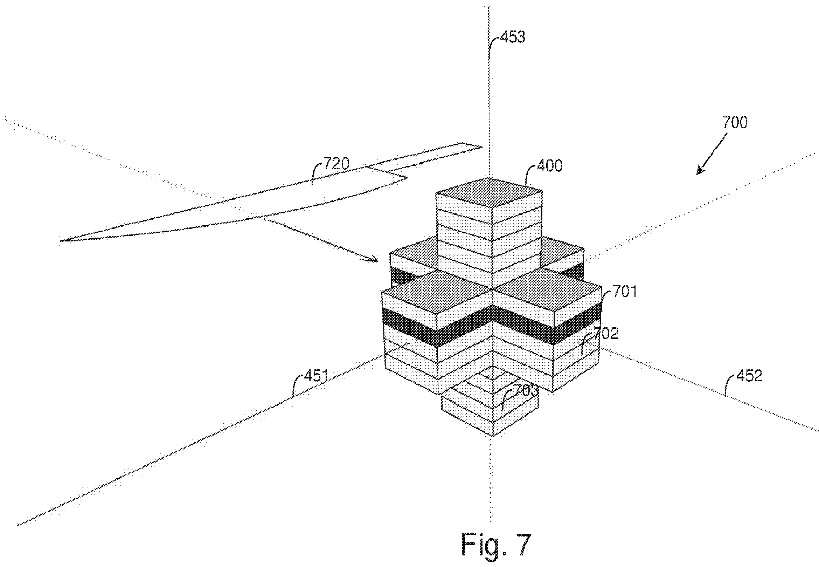

Fig. 7 depicts a stack of slices of a model of a component, according to one or more embodiments illustrated and described herein. As shown, a stack 700 includes slices of component model 400 illustrated in Fig. 4, among which are slices 701, 702, and 703. Slice 701 is depicted with hatching and is discussed in further detail below. Each of the slices are parallel to a cutting plane 720-which is illustrated as a chef's knife and which is parallel to a plane formed by axes 451 and 452-and thus each of the slices are parallel to the other slices in stack 700. Stated another way, each of the slices in stack 700 are perpendicular to a cutting axis, which in the embodiment of Fig. 6 takes the form of axis 453 perpendicular to the plane formed by axes 451 and 452. The stack 700 of slices is ordered along the cutting axis. In some embodiments, the slice may have a thickness along the cutting axis-for instance, several micrometers. In one such embodiment, the thickness of the slice is smaller than a size of the slice along both axes that form the cutting plane.

In some embodiments, segmenting the model of the component into a stack of slices includes segmenting a lattice unit cell that includes the model of the component. For instance, lattice unit cell 510, which includes component model 400, could be segmented into a stack of slices. If the cutting plane (to which each of the slices are parallel) takes the form of the plane formed by axes 451 and 452, and if the cutting plane were parallel to two opposite sides of lattice unit cell 510, then each of the slices in the stack would take the form of a square since lattice unit cell 510 takes the form of a cube. Each of the slices of lattice unit cell 510 may include a respective slice of component model 400 within the lattice unit cell.

Referring back to Fig. 3, at step 308, for each of the slices in stack 700, printing device 102 outputs a respective printing layer that includes an arrangement of one or more slice instances of the slice according to the output structure definition received at step 304. In an embodiment, the printing layer includes a tiling of the slice within a printing-layer boundary, and in another embodiment, the printing layer includes one or more slice instances of the slice arranged according to a pose for a respective component instance to which the slice corresponds. Both are discussed in additional detail below.

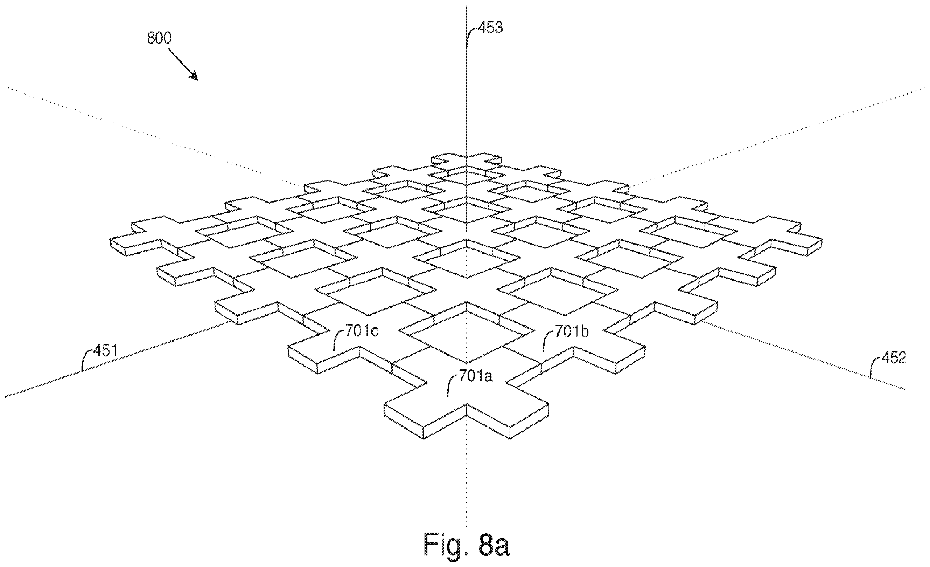

Fig. 8a depicts a tiling of a slice, according to one or more embodiments illustrated and described herein. Specifically, the figure depicts a tiling 800 of slice 701 of stack 700 shown in Fig. 7. In an embodiment, outputting the printing layers at step 308 includes, for each slice in stack 700, printing device 102 outputting a respective printing layer that takes the form of (or includes) a respective tiling of the slice. Accordingly, such an embodiment includes printing device 102 outputting a printing layer that takes the form of (or includes) tiling 800 of slice 701.

The respective tiling of each of the slices in stack 700 may take a form similar to the tiling described above with respect to the lattice structure definition. That is, the tiling may take the form of a two-dimensional tiling of the slice of component model 400 on the printing layer, or may take the form of a two-dimensional tiling of a slice of a lattice unit cell that includes the slice of the component model.

In the embodiment depicted in Fig. 8a, tiling 800 includes respective tiles of slice 701, among which are tiles 701a, 701b, and 701c. Each of the illustrated tiles represents a translation of another tile along axes 451 or 452, which together form a plane parallel to slice 701 and tiling 800. For instance, tile 701b represents a translation of tile 701a along axis 451, and tile 701c represents a translation of tile 701a along axis 452. If tiling 800 were to comprise respective tiles of the slice of lattice unit cell 510 that includes slice 701 of component model 400, then the tiling could take the form of a space filling tiling since each of the tiles of the slice of lattice unit cell 510 would take the form of a square. In such a case, with respect to the tiles of the slice of lattice unit cell 510 that includes slice 701, each of the tiles could be adjacent to (but not intersect) one or more adjacent tiles.

In an embodiment, the respective printing layer for each of the slices in stack 700 has a respective printing-layer boundary, and the respective tiling of the slice on the printing layer takes the form of a respective tiling of the slice within the printing-layer boundary. In some embodiments, outputting the respective printing layer for each of the slices includes uniting portions of the respective tiles of the slice that are adjacent to portions of other tiles of the slice.

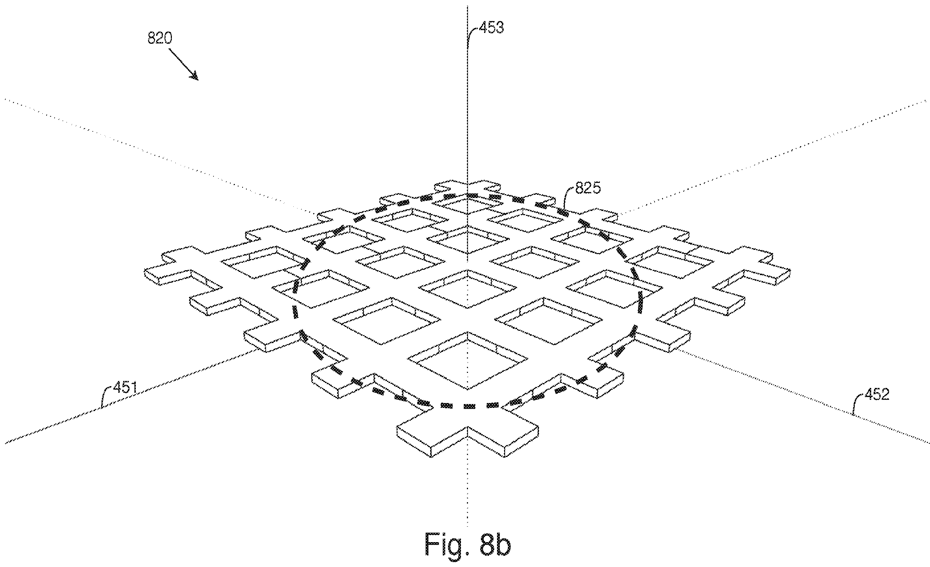

Fig. 8b depicts a tiling of a slice within a printing-layer boundary, according to one or more embodiments illustrated and described herein. Specifically, the figure depicts a tiling 820 of slice 701 (in stack 700 shown in Fig. 7) within a printing-layer boundary 825. In some embodiments, the printing-layer boundary of the respective printing layer for each of the slices in stack 700 (including slice 701) is based on a three-dimensional lattice filling boundary of a lattice structure definition received by printing device 102 at step 304. In one such embodiment, each of the slices is associated with a respective two-dimensional plane of the lattice filling boundary, and the printing-layer boundary of the respective printing layer for each of the slices is based on a boundary of the lattice filling boundary at the plane with which the slice is associated. Printing device 102 may determine which plane the slice is associated with, for instance, using data in the lattice structure definition (such as data associated with the lattice filling boundary). As further shown in Fig. 8b, portions of the respective tiles of slice 701 that are adjacent to portions of other tiles of slice 701 have been united, as illustrated by the lack of boundary lines between respective tiles (e.g., the boundary lines depicted in Fig. 8a).

As noted above, in another embodiment of the disclosure, outputting the printing layers at step 308 includes, for each slice in the stack, printing device 102 outputting a respective printing layer that includes one or more slice instances of the slice, each slice instance corresponding to a respective component instance and arranged in the printing layer according to the respective pose for the component instance identified by the output pattern definition (and specifically, the pattern structure definition) received at step 304.

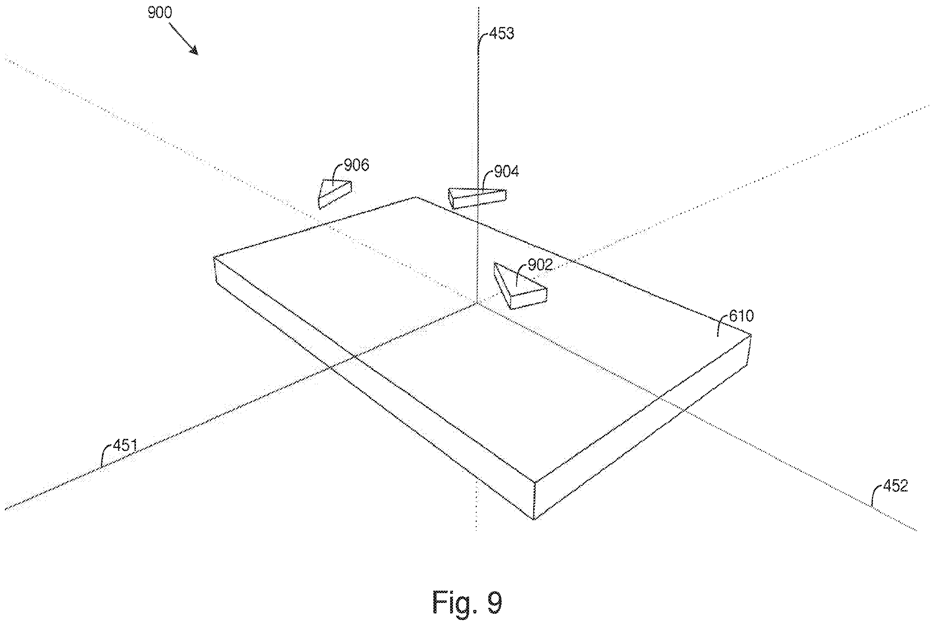

Fig. 9 depicts a printing layer that includes slice instances of a slice, according to one or more embodiments illustrated and described herein. As shown, a printing layer 900 includes slice instances 902, 904, and 906 of a slice (arbitrarily chosen) of a stack, into which the component model of the respective component instances of representations 602, 604, and 606 (in Fig. 6) has been segmented. Slice instances 902, 904, and 906 correspond to the component instances of representations 602, 604, and 606, respectively, and each of the slice instances are arranged according to the pose of the respectively corresponding component instance. For instance, the illustrated arrangement of slice instances 902, 904, and 906 in Fig. 9 reflect the respective orientations of the component instances of representations 602, 604, and 606, respectively, to which the slice instances correspond. Similarly, the arrangement of the slices reflect the respective locations of the corresponding component instances.

Though not illustrated in Fig. 9, in some embodiments, respective slices instances in a given printing layer may intersect (or be adjacent to) other slices instances in the same printing layer. In some such embodiments, outputting the respective printing layer for each slice includes uniting portions of the respective slice instances that intersect (or are adjacent to) portions of other slice instances in the printing layer.

Outputting the printing layers at step 308 may include printing device 102, for each of the slices in stack 700 of slices, generating a respective printing-layer model that includes the arrangement of one or more slices instances of the slice. The respective printing layer output for each of the slices may take the form of (or include) a representation of the generated printing-layer model for the slice.

In an embodiment, outputting the respective printing layer for each of the slices in stack 700 includes, for at least one of the slices in stack 700, outputting the generated printing-layer model for the at least one slice prior to generating the respective printing-layer models for one or more other slices in the stack. Accordingly, printing device 102 need not generate a single model representing the entire printer output. Rather, printing device 102 may generate respective printing models for individual printing layers, which may increase the speed of outputting the printing layers by reducing processor and memory requirements of printing device 102.

It should now be understood that that systems, devices, and methods described herein allow for outputting respective printing layers for slices of a model of a component. Accordingly, multiple copies of a component can be printed by a 3D printer without generating a model of the entire combination of the components.

While particular embodiments have been illustrated and described herein, it should be understood that various other changes and modifications may be made without departing from the scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects of the invention are provided by the subject matter of the following clauses:

A method carried out by a printing device comprises: receiving a model of a three-dimensional component; receiving an output structure definition for the component; segmenting the model of the component into a stack of slices; and for each of the slices in the stack, outputting a respective printing layer comprising an arrangement of one or more slice instances of the slice according to the output structure definition.

The method of any preceding clause, wherein: each of the slices comprises a respective planar slice, and the stack is ordered along a cutting axis perpendicular to each of the slices.

The method of any preceding clause, wherein outputting the respective printing layer for each of the slices in the stack comprises, for each of the slices in the stack: generating a respective printing-layer model that includes an arrangement of one or more slices instances of the slice; and outputting a respective printing layer comprising a representation of the respective printing-layer model.

The method of any preceding clause, wherein outputting the respective printing layer for each of the slices in the stack comprises: for at least one of the slices in the stack, outputting the respective printing layer comprising the representation of the respective generated printing-layer model prior to generating the respective printing-layer model for one or more other slices in the stack.

The method of any preceding clause, wherein: the output structure definition comprises a lattice structure definition that includes an identification of a three-dimensional lattice filling boundary, outputting the respective printing layer for each of the slices in the stack comprises, for each of the slices in the stack, outputting a respective printing layer having a respective printing-layer boundary and comprising a respective tiling of the slice within the printing-layer boundary, and the printing-layer boundary is based on the three-dimensional lattice filling boundary.

The method of any preceding clause, wherein: the tiling of the slice in the stack comprises a respective tiling of a slice of a lattice unit cell that includes the slice in the stack, and the tiling of the slices of the lattice unit cell comprises respective tiles of the slice of the lattice unit cell, the tiles having no gaps between adjacent tiles.

The method of any preceding clause, wherein outputting the respective printing layer for each of the slices in the stack comprises uniting portions of the respective tiles of the slice that are adjacent to portions of other tiles of the slice.

The method of any preceding clause, wherein: the output structure definition comprises a pattern structure definition that includes a model of a three-dimensional output base and an identification of a respective pose for each of a plurality of component instances of the model of the component, each of the component instances intersecting or adjacent to the model of the output base, and outputting the respective printing layer for each of the slices in the stack comprises, for each of the slices in the stack, outputting a respective printing layer comprising one or more slice instances of the slice, each slice instance corresponding to a respective component instance and arranged in the printing layer according to the respective pose for the component instance.

The method of any preceding clause, wherein outputting the respective printing layer for each of the slices comprises uniting portions of the respective slice instances of the slice with intersecting or adjacent portions of other slices instances in the printing layer.

A printing device comprises a processor and a non-transitory computer-readable storage medium having instructions that, when executed by the processor, cause the printing device to: receive a model of a three-dimensional component; receive an output structure definition for the component; segment the model of the component into a stack of slices; and for each of the slices in the stack, output a respective printing layer comprising an arrangement of one or more slice instances of the slice according to the output structure definition.

The printing device of any preceding clause, wherein: each of the slices comprises a respective planar slice, and the stack is ordered along a cutting axis perpendicular to each of the slices.

The printing device of any preceding clause, wherein the instructions to output the respective printing layer for each of the slices in the stack comprise instructions that cause the printing device to, for each of the slices in the stack: generate a respective printing-layer model that includes an arrangement of one or more slices instances of the slice; and output a respective printing layer comprising a representation of the respective printing-layer model.

The printing device of any preceding clause, wherein the instructions to output the respective printing layer for each of the slices in the stack comprise instructions that cause the printing device to: for at least one of the slices in the stack, output the respective printing layer comprising the representation of the respective generated printing-layer model prior to generating the respective printing-layer model for one or more other slices in the stack.

The printing device of any preceding clause, wherein: the output structure definition comprises a lattice structure definition that includes an identification of a three-dimensional lattice filling boundary, the instructions to output the respective printing layer for each of the slices in the stack comprise instructions that cause the printing device to, for each of the slices in the stack, output a respective printing layer having a respective printing-layer boundary and comprising a respective tiling of the slice within the printing-layer boundary, and the printing-layer boundary is based on the three-dimensional lattice filling boundary.

The printing device of any preceding clause, wherein: the tiling of the slice comprises a respective tiling of a lattice unit cell that includes the slice, and the tiling of the lattice unit cell comprises respective tiles of the lattice unit cell having no gaps between adjacent tiles of the lattice unit cell.

The printing device of any preceding clause, wherein the instructions to output the respective printing layer for each of the slices in the stack comprise instruction that cause the printing device to unite portions of the slice in respective tiles of the tiling with adjacent portions of the slice in other tiles of the tiling.

The printing device of any preceding clause, wherein: the output structure definition comprises a pattern structure definition that includes a model of a three-dimensional output base and an identification of a respective pose for each of a plurality of component instances of the model of the component, each of the component instances intersecting or adjacent to the model of the output base, and the instructions to output the respective printing layer for each of the slices in the stack comprise instructions that cause the printing device to, for each of the slices in the stack, output a respective printing layer comprising one or more slice instances of the slice, each slice instance corresponding to a respective component instance and arranged in the printing layer according to the respective pose for the component instance.

The printing device of any preceding clause, wherein the instructions to output the respective printing layer for each of the slices comprise instructions that cause the printing device to unite portions of the respective slice instances of the slice with intersecting or adjacent portions of other slices instances in the printing layer.

A method carried out by a printing device comprises: receiving a model of a three-dimensional component; receiving an output structure definition for the component; segmenting the model of the component into a stack of slices; and for each of the slices in the stack:
generating a respective printing-layer model that includes an arrangement of one or more slices instances of the slice; and
outputting a respective printing layer comprising a representation of the respective printing-layer model,
wherein, for at least one of the slices in the stack, the respective printing layer comprising the representation of the respective generated printing-layer model is output prior to generating the respective printing-layer model for one or more other slices in the stack.

The method of any preceding clause, wherein: the output structure definition comprises a lattice structure definition that includes an identification of a three-dimensional lattice filling boundary, outputting the respective printing layer for each of the slices in the stack comprises, for each of the slices in the stack, outputting a respective printing layer having a respective printing-layer boundary and comprising a respective tiling of the slice within the printing-layer boundary, and the printing-layer boundary is based on the three-dimensional lattice filling boundary.

## Claims

1. A method carried out by a printing device, the method comprising:
receiving a model of a three-dimensional component;
receiving an output structure definition for the component;
segmenting the model of the component into a stack of slices; and
for each of the slices in the stack, outputting a respective printing layer comprising an arrangement of one or more slice instances of the slice according to the output structure definition.

2. The method of claim 1, wherein:
each of the slices comprises a respective planar slice, and
the stack is ordered along a cutting axis perpendicular to each of the slices.

3. The method of claim 1 or claim 2, wherein outputting the respective printing layer for each of the slices in the stack comprises, for each of the slices in the stack:
generating a respective printing-layer model that includes an arrangement of one or more slices instances of the slice; and
outputting a respective printing layer comprising a representation of the respective printing-layer model.

4. The method of claim 3, wherein outputting the respective printing layer for each of the slices in the stack comprises:
for at least one of the slices in the stack, outputting the respective printing layer comprising the representation of the respective generated printing-layer model prior to generating the respective printing-layer model for one or more other slices in the stack.

5. The method of any preceding claim, wherein:
the output structure definition comprises a lattice structure definition that includes an identification of a three-dimensional lattice filling boundary,
outputting the respective printing layer for each of the slices in the stack comprises, for each of the slices in the stack, outputting a respective printing layer having a respective printing-layer boundary and comprising a respective tiling of the slice within the printing-layer boundary, and
the printing-layer boundary is based on the three-dimensional lattice filling boundary.

6. The method of claim 5, wherein:
the tiling of the slice in the stack comprises a respective tiling of a slice of a lattice unit cell that includes the slice in the stack, and
the tiling of the slices of the lattice unit cell comprises respective tiles of the slice of the lattice unit cell, the tiles having no gaps between adjacent tiles.

7. The method of claim 6, wherein outputting the respective printing layer for each of the slices in the stack comprises uniting portions of the respective tiles of the slice that are adjacent to portions of other tiles of the slice.

8. The method of any preceding claim, wherein:
the output structure definition comprises a pattern structure definition that includes a model of a three-dimensional output base and an identification of a respective pose for each of a plurality of component instances of the model of the component, each of the component instances intersecting or adjacent to the model of the output base, and
outputting the respective printing layer for each of the slices in the stack comprises, for each of the slices in the stack, outputting a respective printing layer comprising one or more slice instances of the slice, each slice instance corresponding to a respective component instance and arranged in the printing layer according to the respective pose for the component instance.

9. The method of claim 8, wherein outputting the respective printing layer for each of the slices comprises uniting portions of the respective slice instances of the slice with intersecting or adjacent portions of other slices instances in the printing layer.

10. A printing device comprising a processor and a non-transitory computer-readable storage medium having instructions that, when executed by the processor, cause the printing device to carry out the method of any one of claims 1-9.

11. The method according to any preceding claim, further comprising:
for each of the slices in the stack generating a respective printing-layer model that includes an arrangement of one or more slices instances of the slice,
wherein outputting the respective printing layer further comprises outputting a representation of the respective printing-layer model, and
wherein, for at least one of the slices in the stack, the respective printing layer comprising the representation of the respective generated printing-layer model is output prior to generating the respective printing-layer model for one or more other slices in the stack.

12. The method of claim 11, wherein:
the output structure definition comprises a lattice structure definition that includes an identification of a three-dimensional lattice filling boundary,
outputting the respective printing layer for each of the slices in the stack comprises, for each of the slices in the stack, outputting a respective printing layer having a respective printing-layer boundary and comprising a respective tiling of the slice within the printing-layer boundary, and
the printing-layer boundary is based on the three-dimensional lattice filling boundary.
